(19) Europäisches Patentamt / European Patent Office / Office européen des brevets

(11) **EP 4 435 727 A1**

(12) **EUROPEAN PATENT APPLICATION**

(43) Date of publication:
**25.09.2024   Bulletin 2024/39**

(21) Application number: **23162892.6**

(22) Date of filing: **20.03.2023**

(51) International Patent Classification (IPC):
**G06T 15/30** (2011.01)     **G06T 19/00** (2011.01)
**G06T 13/20** (2011.01)

(52) Cooperative Patent Classification (CPC):
**G06T 15/30; G06T 19/00;** G06T 2200/24;
G06T 2219/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **InUnum AG
9491 Ruggell (LI)**

(72) Inventor: **Hackl, Eberhart
9491 Ruggell (LI)**

(74) Representative: **Torggler & Hofmann
Patentanwälte - Rankweil
Torggler & Hofmann Patentanwälte
GmbH & Co KG
Hörnlingerstraße 3
Postfach 5
6830 Rankweil (AT)**

(54) **GRAPHICS PROCESSING SYSTEM AND METHOD FOR GENERATING A 3D RENDER**

(57)    A graphics processing system and a method for generating a 3D render of at least one object (2) which has an internal structure wherein a target point (8) for user-interactive rotations of the render is placed on the near surface area (9.1) of a view frustum (9), or at least close to the near surface area (9.1) of the view frustum (9).

FIGURE 4B

**Description**

In one aspect the invention is in the field of a graphics processing system for generating a user-interactive 3D data render of at least one object which has an internal structure and a method for generating a user-interactive 3D data render of at least one object which has an internal structure.

In another aspect the invention relates to a computer program which, when the program is executed by a computer, causes the computer to be configured as such a graphics processing system or to carry out such a method.

In yet another aspect the invention relates to a data carrier signal or a data storage device carrying such a computer program.

The prior art teaches graphics processing systems and methods in which it is very cumbersome for a user to manipulate a render such that an internal structure of an object can be viewed in a performant way which is a prerequisite for completing a variety of technical tasks such as taking measurements or selecting further objects present within the internal structure of the object. This is especially true with respect to point clouds which are the result of 3D scanning operations but is also true with respect to 3D models.

It is an object of the invention to provide a graphics processing system for generating a user-interactive 3D data render of at least one object which has an internal structure such that it is possible for a user to manipulate a render such that an internal structure of an object can be viewed faster and more flexible.

It is another object of the invention to provide a method for generating a user-interactive 3D data render of at least one object which has an internal structure such that it is possible for a user to manipulate a render such that an internal structure of an object can be viewed faster and more flexible.

Still other objects and advantages of the invention will in part be obvious and will in part be apparent from the specification and drawings.

The term "3D data" refers to digital data which represents an object or a scene comprising more than one object in three dimensions. Preferably, the 3D data represents at least one object in the form of a building having an internal structure, e.g., in the form of different floors and internal partitions such as walls.

The term "rendering" describes a process to generate a 2D projection of a 3D image (the "render") based on 3D data by means of a processing unit such as a graphics processing system. The render can be photo-realistic or abstract.

The term "processing unit" describes the smallest entity of a CPU (Central Processing Unit) that can independently read and execute program instructions. Each processing entity appears to the operating system as an independent processor that can be addressed in a parallel manner. Each CPU provides at least one processing unit, but in the context of high performance computing modern computer systems usually have more than one processing unit. For example, the CPU can be a multicore-processor having a plurality of cores. A core is an independent actual processing unit within the CPU that can read and execute program instructions independently from other cores of the CPU. Further each core can allow multi-threading, i.e., one physical core appears as multiple processing units to the operating system, sometimes referred to as "hardware threads". In other cases, each core of the CPU can be a single processing unit or the CPU itself can be a single processing unit. Furthermore, it is to be understood that the term CPU is supposed to encompass GPUs (Graphics Processing Units).

The term "memory unit" refers to any electronic device suitable for storing electronic data such as RAM or an SSD.

The term "signal input" means any electronic device enabling the graphics processing system to receive data from the outside world.

The term "signal output" means any electronic device enabling the graphics processing system to provide data to the outside world.

The term "view frustum" refers to that region or volume of 3D space in the render to be rendered that must be visualized by a rendering device for a given view. 3D data outside the view frustum is not visible to a user in that view and does not have to be rendered. Usually, a view frustum has a surface being composed of planes and comprises a near plane and a far plane, however any kind of surface having a near surface area and a far surface area (such as curved surface areas) can be used.

The term "user control device" refers to any device which allows a user to input control commands to the processing unit such as a computer mouse, a trackpad, a stylus, a touchscreen operated by a finger of the user, a voice command system, and the like, in order to interactively define various entities of the render (such as defining or moving a target point, defining a distance between near surface area and far surface area of the view frustum, ...) and/or to rotate the render around the target point.

The term "rendering device" refers to any electronic device configured to visualize the render for a user and can comprise a processing unit and a visualization device such as a screen.

One object of the disclosure relates to a graphics processing system for generating a user-interactive 3D data render of at least one object which has an internal structure, comprising:

- a processing unit
- a memory unit which is operatively connected to the processing unit
- a signal input for inputting 3D data representing the at least one object (the outside of the object and its internal structure) which is to be rendered to the memory unit
- a signal output for outputting the render to a rendering device
- a user control device operatively connected to the processing unit for user-interactively accepting control input by a user

wherein the processing unit is configured to user-interactively generate the render based on the 3D data and based on the control input by

- defining a view frustum comprising a near surface area and a far surface area
- defining a target point

  • which serves as a center for user-interactive rotations of the view frustum (which are determined by the control input provided by the user), and
  • which can be user-interactively moved into the object which has an internal structure (such that the inside of the object is rendered)

- defining the view frustum such that in the render the near surface area comprises the target point, or the target point is close to the near surface area
- rendering a view
- providing the render to the signal output

Another object of the invention relates to a method for generating a user-interactive 3D render of at least one object which has an internal structure, comprising at least the steps of:

- providing 3D data representing the at least one object (the outside of the object and its internal structure) to be rendered
- providing a processing unit which is configured to generate the render based on the provided 3D data and, user-interactively depending on the control input of a user, in different views

using the processing unit for user-interactively generating the render based on the 3D data, and based on the control input by

- defining a view frustum comprising a near surface area and a far surface area
- defining a target point

  • which serves as a center for user-interactive rotations of the view frustum (which are determined by the control input of the user), and
  • which can be user-interactively moved into the object which has an internal structure (such that the inside of the object is rendered)

- defining the view frustum such that in the render the near surface area comprises the target point, or the target point is close to the near surface area
- rendering a view

Yet another object of the invention relates to a computer program which, when the program is executed by a computer,

- causes a processing unit of the computer to be configured to user-interactively generate a render of at least one object represented by inputted 3D data (the outside of the object and its internal structure) based on the 3D data, and based on control input provided to the computer by a user, by

  • defining a view frustum comprising a near surface area and a far surface area
  • defining a target point which serves as a center for user-interactive rotations of the view frustum (which are determined by the control input provided by a user), and which can be user-interactively moved into the object which has an internal structure (such that the inside of the object is rendered)
  • defining the view frustum such that in the render the near surface area comprises the target point, or the target point is close to the near surface area
  • rendering a view

- and/or causes the computer to carry out a method according to at least one of the embodiments described herein.

Still another object of the invention relates to a data carrier signal or a data storage device carrying such a computer program.

The 3D render is user-interactive in the sense that at least a position of the target point in the render (by moving the target point around) and an orientation of the view frustum (by determining a rotation of the view frustum around the target point) can be chosen by the user and the 3D data is rendered accordingly. The processing unit of the graphics processing system can be configured to provide, and the method can provide for, further possibilities for user-interaction as known in the art (such as zooming the render, removing parts of the render such as layers, ...).

The target point and thus the center of rotation for user-interactive rotations of the view frustum (rotation of a virtual camera) is defined inside the near surface area or is at least defined close to the near surface area. In other words, the distance between the virtual camera and the near surface area is the same as the distance between the virtual camera and the target point (or, if the target point is only close to the near surface area 9.1, there will be a small difference of $\pm d$). This facilitates user input by enabling the user to make a quick and more precise selection of the view frustum necessary for completing different technical tasks such as taking measurements with respect to a specific sub-structure of the internal structure such as a specific room or submitting a command for selecting a specific sub-structure of the internal structure such as an object placed inside a specific room. It is also possible to overlay a point cloud coming from a 3D scan of the object and a 3D model of the object for any relevant view and to compare the point cloud and the 3D model for checking whether an object was built according to the 3D model or whether there are deviations (and to quantify any deviations).

Preferred embodiments of the invention are described in dependent claims.

It is preferred that the processing unit can be prompted by a command input by the user to activate a viewing mode in which the target point is defined as described herein, while outside that viewing mode the processing unit operates like in the prior art. Such activation can happen in any way known in the art, e.g., by activating a virtual button in a ribbon or toolbar of a visualization program run by a rendering device which is provided with the render generated by the processing unit.

In those embodiments in which the processing unit is configured to define the target point such that it lies in the near surface area of the view frustum, it is preferred that the processing unit is configured to define the target point as staying in the near surface area no matter how the position of the target point is changed based on the control input of a user.

In those embodiments in which the processing unit is configured to define the target point with a non-zero separation (distance $d \neq 0$) from the near surface area but close to the near surface area, the processing unit can be configured to position the target point within the view frustum or outside the view frustum.

In these embodiments it is preferred that the processing unit is configured to define the distance between the target point and the near surface area as remaining constant, no matter how the position of the target point is changed based on the control input of a user.

In some embodiments with a non-zero separation between target point and near surface area the processing unit is configured to define the target point such that a distance $d$ between the target point and the near surface area is smaller than a largest extension $E$

$$d \leq \frac{E}{n}$$

of the near plane area as defined by the relation wherein $n$ is a natural number such that $n \geq 5$, preferably $n \geq 8$, in particular $n \geq 10$. Of course, in the situation where the processing unit is configured to place the target point inside the near surface area, the distance $d$ between near surface area and target point fulfills $d = 0$. By way of example, if the near surface area is in the shape of a square or rectangle the largest extension $E$ corresponds to the diagonal of the near surface area; in case of a near surface area in the shape of a circle the largest extension $E$ corresponds to the diameter of the near surface area. In the case of an arbitrarily shaped surface, the extension can be measured by the metric implied on the surface by the Euclidean metric of the embedding space.

In some embodiments the processing unit is configured to arrange the near surface area and the far surface area such that they are parallel. In such a case the distance between near surface area and far surface area equals $D$ everywhere, not only when measured along a line running through the target point and being orthogonal to the near surface area.

In some embodiments the processing unit is configured to accept user-interactively control input defining a distance $D$ between the near surface area and the far surface area, in particular by user-interactively moving the far surface area. The distance $D$ can be chosen as infinity by the user.

In some embodiments the processing unit is configured to use view frustum culling, i.e., to render only that part of the 3D data which is inside the view frustum.

In some embodiments the processing unit is configured to generate the render based on 3D data in the form of a point cloud or a 3D model. 3D data in form of a point cloud can be obtained by 3D scanning an object or a scene of the environment comprising at least one object using methods known in the art such as a SLAM algorithm and the like. For example, a 3D model can be prepared on basis of a point cloud or designed from scratch.

In some embodiments the processing unit is configured to generate the render in an orthographic projection, preferably in a target centered view.

In some embodiments the graphics processing system forms or is part of a distributed computed system. In these cases, the rendering device can communicate with the graphics processing system by using a telecommunication means such as the internet.

In other embodiments the graphics processing system is a stand-alone computer. In these cases, the rendering device can be a part of that computer.

The above description of embodiments of the graphics processing system is also to be understood to serve as a description of embodiments of the method in order to avoid an unnecessary lengthening of the description.

Embodiments of the graphics processing system and of the method are discussed making use of the enclosed figures.

Figure 1 shows a schematic view of a graphics processing system for generating a user-interactive 3D render of at least one object which has an internal structure.

Figure 2 shows a schematic of a method for generating a user-interactive 3D render of at least one object which has an internal structure.

Figure 3 shows the principle of rendering according to the prior art.

Figure 4A shows the principle of rendering according to the invention for a perspective projection.

Figure 4B shows the principle of rendering according to the invention for an orthographic projection.

Figure 5A shows a rendering according to the prior art based on 3D data in the form of a point cloud.

Figure 5B shows a rendering according to the invention based on 3D data in the form of a point cloud.

Figure 6A shows a rendering according to the prior art based on 3D data in the form of a point cloud.

Figure 6B shows a rendering according to the invention based on 3D data in the form of a point cloud.

Figure 7A shows a rendering according to the prior art based on 3D data in the form of a point cloud.

Figure 7B shows a rendering according to the invention based on 3D data in the form of a point cloud.

Figure 8A shows a rendering according to the prior art based on 3D data in the form of a model.

Figure 8B shows a rendering according to the invention based on 3D data in the form of a model.

Figure 9A shows a rendering according to the prior art based on 3D data in the form of a model.

Figure 9B shows a rendering according to the invention based on 3D data in the form of a model.

Figure 10A shows a rendering according to the prior art based on 3D data in the form of a model.

Figure 10B shows a rendering according to the invention based on 3D data in the form of a model.

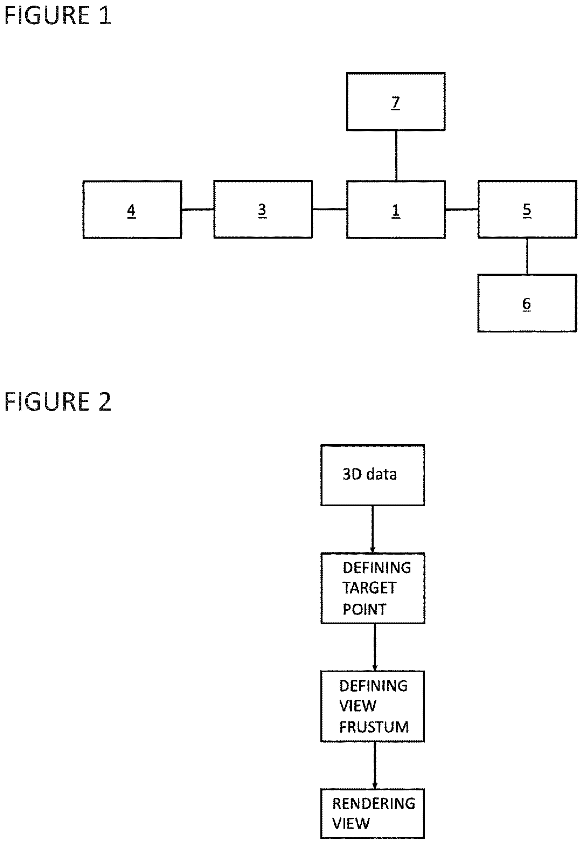

In Figure 1 a graphics processing system for generating a user-interactive 3D render of at least one object 2 which has an internal structure is shown.

The graphics processing system comprises a processing unit 1, a memory unit 3 which is operatively connected to the processing unit 1, a signal input 4 for inputting 3D data representing the object 2 which is to be rendered to the memory unit 3, a signal output 5 for outputting the render to a rendering device 6 (which is not necessarily part of the graphics processing system), and a user control device 7 operatively connected to the processing unit 1 for user-interactively accepting control input by a user.

The processing unit 1 is configured to user-interactively generate the render based on the 3D data, and based on the control input of a user by defining a target point 8 which serves as a center for user-interactive rotations of the render determined by the control input provided by the user via the user control device 7 and to user-interactively define a view frustum 9 which comprises at least a near surface area 9.1 and a far surface area 9.2. Other than shown, the near surface area 9.1 and the far surface area 9.2 of the view frustum do not have to be parallel. There can be further surface areas of the view frustum which connect the near surface area 9.1 and the far surface area 9.3, e.g., such that the view frustum 9 is in the form of a frustum of a rectangular pyramid or in the form of a box.

The spatial relationship between the near surface area 9.1 of the view frustum 9 and the target point 8 is defined by the processing unit 1 such that the target point 8 is at least close to the near surface area 9.1 or the near surface area 9.1 comprises the target point 8, i.e., the target point 8 lies within the near surface area 9.1.

The render is then created by the processing unit 1 with a view orthogonal to the near surface area 9.1 and is provided to the signal output 5.

The rendering device 6 receives the render via the signal output 5 and visualizes the render for a user.

In Figure 2 a schematic of a method for generating a user-interactive 3D render of at least one object 2 which has an internal structure is shown.

As a first step, 3D data representing the object 2 which is to be rendered is provided to a processing unit 1 which is configured to interactively generate the render based on the provided 3D data in a user-interactive way such that a user can chose different views depending on the control input of the user.

The processing unit 1 interactively generates the render based on the 3D data and based on the control input by defining a target point 8 which serves as a center for interactive rotations of the render determined by the control input of the user, and by defining a view frustum 9 comprising a near surface area 9.1 and a far surface area 9.2 such that in the render the near surface area 9.1 comprises the target point 8, or the target point 8 is at least close to the near surface area 9.1, preferably in the sense that a distance d between the target point 8 and the near surface area 9.1 is smaller than a largest extension of the near surface area 9.1 such that the relation $d \leq \frac{E}{n}$, wherein $n$ is a natural number such that $n \geq 5$, preferably $n \geq 8$, in particular $n \geq 10$ holds.

A render with a view orthogonal to the near surface area 9.1 is generated.

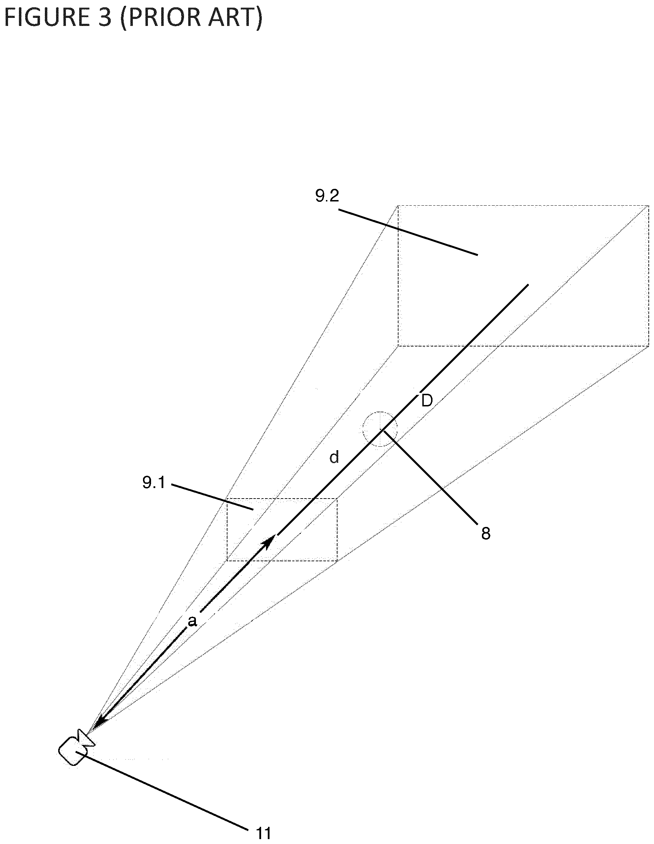

The principle of rendering according to the prior art is shown in Figure 3. The target point 8, and thus the center of rotation for user-interactive rotations of the view frustum 9 (rotation of virtual camera 11), lies far away (at a distance d) from the near surface area 9.1 inside the view frustum 9. The distance between the target point 8 from the virtual camera 11 is $a + d$.

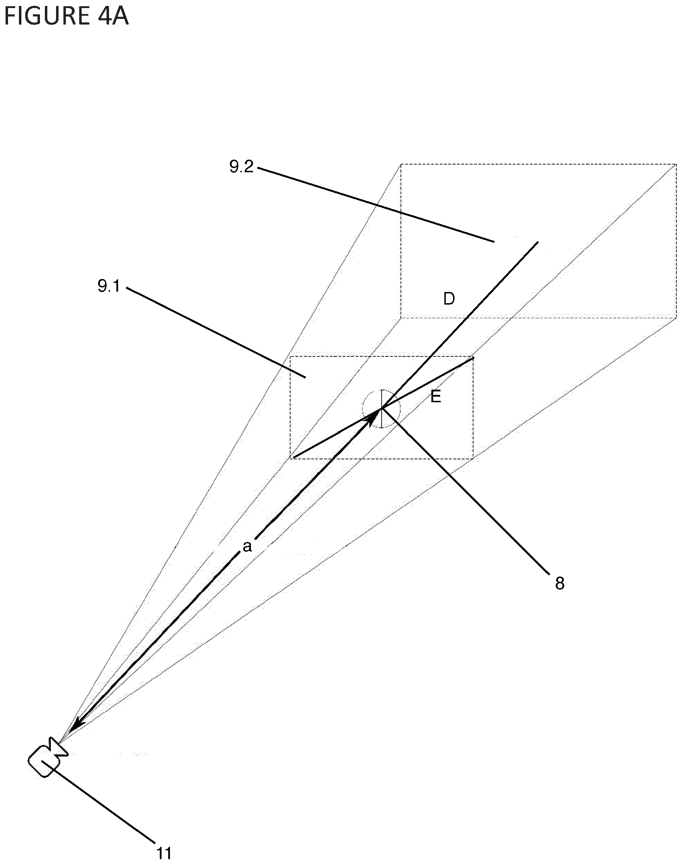

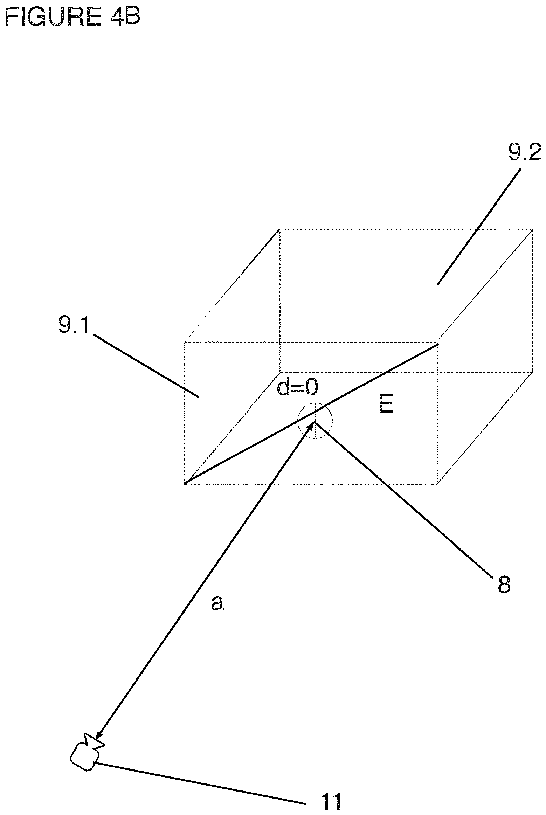

The principle of rendering according to the invention is shown in Figures 4A (for a perspective projection) and 4B (for an orthographic projection). The target point 8 and thus the center of rotation for user-interactive rotations of the view frustum 9 (rotation of virtual camera 11) is defined, as shown, as positioned inside the near surface area 9.1 ($d = 0$) or is at least defined as positioned close to the near surface area 9.1. In other words, the distance between the virtual camera 11 and the near surface area 9.1 is the same as the distance between the virtual camera 11 and the target point 8, namely $a$ (in the situation as depicted where $d = 0$; if the target point 8 is only close to the near surface area 9.1 there will be a small difference of $\pm d$). The largest extension of the near surface plan 9.1 is marked by $E$.

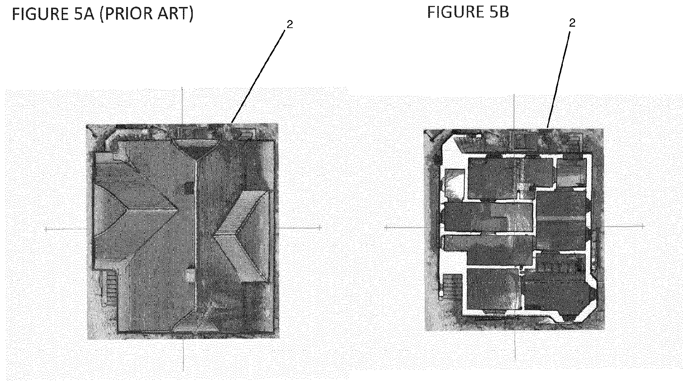

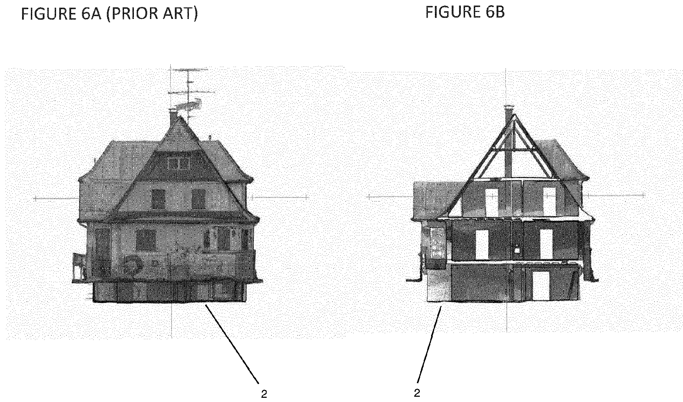

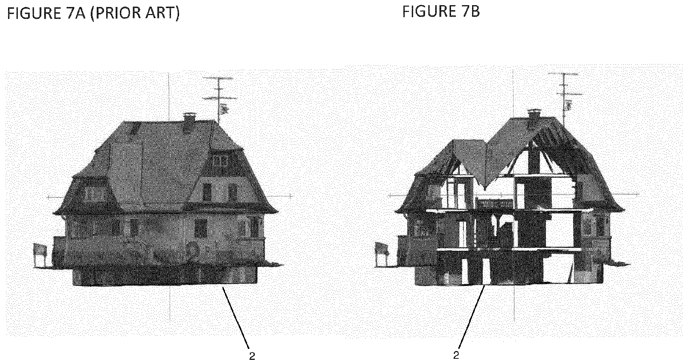

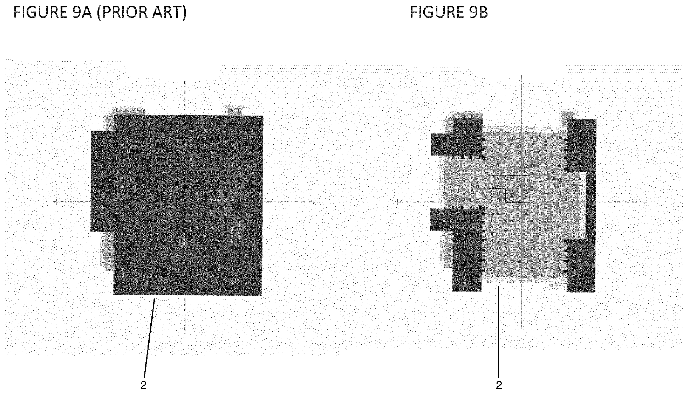

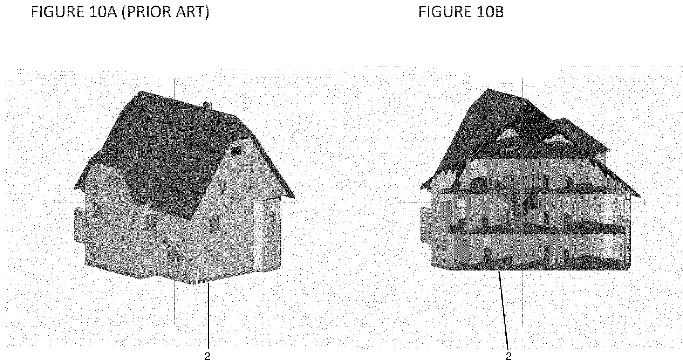

The sequence of Figures 5A, 6A, 7A, 8A, 9A, 10A (showing a rendering of an object 2 having an internal structure in the form of a building with floors, walls and staircases according to the prior art) in comparison to the sequence of Figures 5B, 6B, 7B, 8B, 9B, 10B (showing a rendering of the same object 2 as in the prior art but according to the invention) shows the advantage of the invention.

Figures 5 to 7 refer to a rendering based on 3D data representing an object 2 in the form of a point cloud obtained by using a 3D scanner.

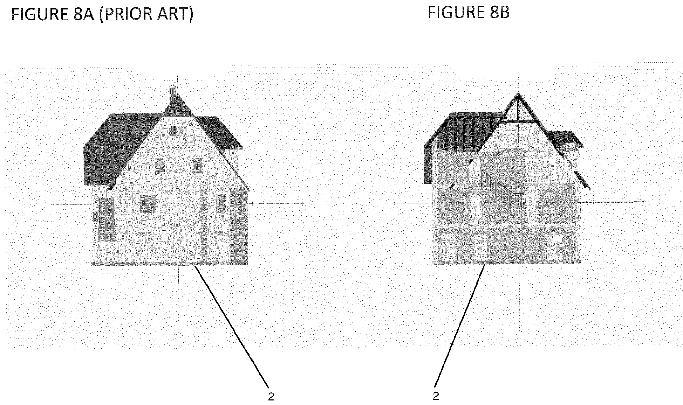

Figures 8 to 10 refer to a rendering based on 3D data representing an object 2 in the form of a 3D model built from scratch.

**List of Reference numbers:**

| | |
|---|---|
| 1 | processing unit |
| 2 | object |
| 3 | memory unit |
| 4 | signal input |
| 5 | signal output |
| 6 | rendering device |
| 7 | user control device |
| 8 | target point |
| 9 | view frustum |
| 9.1 | near surface area |
| 9.2 | far surface area |
| 10 | building |
| 11 | virtual camera |

| | |
|---|---|
| $a$ | distance between virtual camera and near surface area |
| $d$ | distance between near surface area and target point |
| $E$ | largest extension of near surface area |
| $D$ | distance between near surface area and far surface |

area

**Claims**

1. A graphics processing system for generating a user-interactive 3D render of at least one object (2) which has an internal structure, comprising:

   - a processing unit (1)
   - a memory unit (3) which is operatively connected to the processing unit (1)
   - a signal input (4) for inputting 3D data representing the at least one object (2) which is to be rendered to the memory unit (3)
   - a signal output (5) for outputting the render to a rendering device (6)
   - a user control device (7) operatively connected to the processing unit (1) for user-interactively accepting control input by a user

   wherein the processing unit (1) is configured to user-interactively generate the render based on the 3D data, and based on the control input by

   - defining a view frustum (9) comprising a near surface area (9.1) and a far surface area (9.2)
   - defining a target point (8)

      • which serves as a center for user-interactive rotations of the view frustum (9), and
      • which can be user-interactively moved into the object (2) which has an internal structure

   - defining the view frustum (9) such that in the render the near surface area (9.1) comprises the target point (8), or the target point (8) is close to the near surface area (9.1)
   - rendering a view
   - providing the render to the signal output (5).

2. The system according to the preceding claim wherein, in case the processing unit (1) is configured to define the target point (8) with a non-zero separation ($d \neq 0$) from the near surface area (9.1), the processing unit (1) is configured to define the target point (8) such that a distance ($d$) between the target point (8) and the near surface area (9.1) is smaller than the largest extension ($E$) of the near surface area (9.1) as defined by the relation $$d \leq \frac{E}{n}$$ wherein $n$ is a natural number such that $n \geq 5$, preferably $n \geq 8$, in particular $n \geq 10$.

3. The system according to one of the preceding claims wherein the processing unit (1) is configured to define the near surface area (9.1) and the far surface area (9.2) such that they are in the form of planes and are preferably parallel.

4. The system according to at least one of the preceding claims wherein the processing unit (1) is configured to user-interactively accept control input defining a distance (D) between the near surface area (9.1) and the far surface area (9.2), in particular by user-interactively moving the far surface area (9.2).

5. The system according to at least one of the preceding claims wherein the processing unit (1) is configured to use view frustum culling.

6. The system according to at least one of the preceding claims wherein the processing unit (1) is configured to generate the render based on 3D data in the form of a point cloud or a 3D model.

7. The system according to at least one of the preceding claims wherein the processing unit (1) is configured to generate the render in an orthographic projection, preferably in a target centered view.

8. Method for generating a user-interactive 3D render of at least one object (2) which has an internal structure, comprising at least the steps of:

   - providing 3D data representing the at least one object (2) to be rendered
   - providing a processing unit (1) which is configured to generate the render based on the provided 3D data and, user-interactively depending on the control input of a user, in different views

   wherein the processing unit (1) is used for user-interactively generating the render based on the 3D data, and based on the control input by

   - defining a view frustum (9) comprising a near surface area (9.1) and a far surface area (9.2)
   - defining a target point (8)

     • which serves as a center for user-interactive rotations of the view frustum, and
     • which can be user-interactively moved into the object (2) which has an internal structure

   - defining the view frustum (9) such that in the render the near surface area (9.1) comprises the target point (8), or the target point (8) is close to the near surface area (9.1)
   - rendering a view.

9. Method according to the preceding claim wherein the target point (8) is defined with a non-zero separation (d ≠ 0) from the near surface area (9.1) and the processing unit (1) defines the target point (8) such that a distance (d) between the target point (8) and the near surface area (9.1) is smaller than a largest extension (E) of the near surface area (9.1) as defined by the relation $d \leq \frac{E}{n}$ wherein n is a natural number such that $n \geq 5$, preferably $n \geq 8$, in particular $n \geq 10$.

10. Method according to one of the two preceding claims wherein the processing unit (1) defines the near surface area (9.1) and the far surface area (9.2) in the form of planes and preferably such that they are parallel.

11. Method according to at least one of claims 8 to 10 wherein the processing unit (1) generates the render in an orthographic projection, preferably in a target centered view.

12. Method according to at least one of claims 8 to 11 wherein the processing unit (1) user-interactively accepts control input defining a distance (D) between the near surface area (9.1) and the far surface area (9.2), in particular by user-interactively moving the far surface area (9.2).

13. Method according to at least one of claims 8 to 12 wherein the 3D data is provided in the form of point cloud or a 3D model.

14. Computer program which, when the program is executed by a computer,

   - causes a processing unit (1) of the computer to be configured to user-interactively generate a render of at least one object (2) represented by inputted 3D data based on the 3D data, and based on control input provided to the computer by a user, by

     • defining a view frustum (9) comprising a near surface area (9.1) and a far surface area (9.2)
     • defining a target point (8) which serves as a center for user-interactive rotations of the view frustum, and which can be user-interactively moved into the object (2) which has an internal structure
     • defining the view frustum (9) such that in the render the near surface area (9.1) comprises the target point (8), or the target point (8) is close to the near surface area (9.1)
     • rendering a view

   - and/or causes the computer to carry out a method according to at least one of claims 8 to 13.

**15.** A data carrier signal or a data storage device carrying the computer program of the preceding claim.

# FIGURE 1

# FIGURE 2

# FIGURE 3 (PRIOR ART)

# FIGURE 4A

# FIGURE 4B

FIGURE 5A (PRIOR ART)

2

FIGURE 5B

2

FIGURE 6A (PRIOR ART)     FIGURE 6B

2     2

FIGURE 7A (PRIOR ART)

FIGURE 7B

FIGURE 8A (PRIOR ART)                    FIGURE 8B

2                    2

FIGURE 9A (PRIOR ART)

FIGURE 9B

FIGURE 10A (PRIOR ART)                    FIGURE 10B

Europäisches
Patentamt

European
Patent Office

Office européen
des brevets

# EUROPEAN SEARCH REPORT

Application Number

EP 23 16 2892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Chief Architect® X5 Reference Manual Professional Design & Drafting Software",<br>,<br>1 January 2014 (2014-01-01), pages 1-1274, XP055743964,<br>Retrieved from the Internet:<br>URL:https://cloud.chiefarchitect.com/1/pdf/documentation/chief-architect-x5-reference-manual.pdf<br>[retrieved on 2020-10-26]<br>* figures on pages 815, 832, 834, 845, 848, 853 *<br>* table on page 841 *<br>* chapter: "Rendered and Vector Views"; page 821 *<br>* page 824, right-hand column *<br>* page 833, last paragraph - page 834, paragraph 1 *<br>* chapters: "Rebuild 3D" & "Remove 3D", "Repositioning Cameras"; page 840 *<br>* chapter: "Using the Edit Handles"; page 845 *<br>* chapter: "Field of View"; page 847 *<br>* chapter: "Camera Specification Dialog"; page 852 - page 854 *<br>* page 854, left-hand column *<br>* chapter: "Speeding up 3D View Generation"; page 883 *<br>* chapter: "Rendering Techniques"; page 873 - page 883 *<br>* chapter: "Importing & Exporting"; page 1069 - page 1092 *<br>-----<br>-/-- | 1-15 | INV.<br>G06T15/30<br>G06T19/00<br>G06T13/20<br><br><br>TECHNICAL FIELDS SEARCHED (IPC)<br><br>G06T |

The present search report has been drawn up for all claims

| Place of search | Date of completion of the search | Examiner |
|---|---|---|
| Berlin | 29 August 2023 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 16 2892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Inc. Autodesk: "AutoCAD User's Guide", , 1 January 2012 (2012-01-01), pages iii-846, XP055309553, Retrieved from the Internet: URL:http://docs.autodesk.com/ACDMAC/2013/ENU/PDFs/acdmac_2013_users_guide.pdf [retrieved on 2016-10-11] * figures on pages 61, 64, 69, 74, 78 * * chapter: "Parts of the User Interface"; page 7 – page 8 * * chapter: "About Keyboard Shortcuts"; page 16 – page 22 * * chapter: "Open or Save a Drawing"; page 43 – page 46 * * chapter: "Define a 3D View with Coordinate Values or Angles"; page 62 * * chapters: "Control Performance"–"Memory Tuning"; page 71 – page 72 * * chapters: "Overview of 3D Views", "Use 3D Navigation Tools"; page 73 * * chapter: "Set Clipping Planes"; page 74 * * chapter: "Drag or Click the ViewCube Tool"; page 77 – page 78 * * chapter: "Work with Drawing Files over the Internet"; page 706 – page 709 * * chapter: "Render 3D Objects for Realism"; page 738 – page 749 * * page 780, last paragraph *<br><br>-----<br><br>-/-- | 1-15 | |
| | | | **TECHNICAL FIELDS SEARCHED (IPC)** |

The present search report has been drawn up for all claims

| Place of search | Date of completion of the search | Examiner |
|---|---|---|
| Berlin | 29 August 2023 | Höller, Helmut |

EPO FORM 1503 03.82 (P04C01)

Europäisches
Patentamt

European
Patent Office

Office européen
des brevets

# EUROPEAN SEARCH REPORT

**Application Number**

EP 23 16 2892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/046645 A1 (BRETON PIERRE FELIX [CA] ET AL) 3 March 2005 (2005-03-03)<br>* figures 2, 3, 8, 9, 12, 14-17 *<br>* paragraphs [0011], [0012] *<br>* paragraph [0031] - paragraph [0043] *<br>* paragraph [0056] - paragraph [0069] *<br>* paragraphs [0089], [0101], [0102] *<br>----- | 1-15 | |
| A | US 2021/378750 A1 (NAVAB NASSIR [DE] ET AL) 9 December 2021 (2021-12-09)<br>* figures 2-3C, 9, 10A, 10C, 11A-11C *<br>* paragraphs [0070], [0076] *<br>* paragraph [0102] - paragraph [0119] *<br>----- | 1-15 | |
| A | US 2013/100118 A1 (MLYNIEC PAUL [US] ET AL) 25 April 2013 (2013-04-25)<br>* figures 1, 7, 24, 27-29 *<br>* paragraph [0015] *<br>* paragraph [0077] - paragraph [0079] *<br>* paragraph [0130] *<br>* paragraph [0139] - paragraph [0142] *<br>----- | 1-15 | **TECHNICAL FIELDS SEARCHED (IPC)** |
| T | Anonymous: "3D Orbit Auto Target – AutoCAD 3D Modelling & Rendering – AutoCAD Forums",<br>,<br>6 May 2009 (2009-05-06), XP093076732,<br>Retrieved from the Internet:<br>URL:https://www.cadtutor.net/forum/topic/10234-3d-orbit-auto-target/<br>[retrieved on 2023-08-28]<br>* the whole document *<br>----- | 1,2,8,9, 14,15 | |

The present search report has been drawn up for all claims

| Place of search | Date of completion of the search | Examiner |
|---|---|---|
| Berlin | 29 August 2023 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 2892

29-08-2023

| Patent document cited in search report | | Publication date | Patent family member(s) | | Publication date |
|---|---|---|---|---|---|
| US 2005046645 | A1 | 03-03-2005 | NONE | | |
| US 2021378750 | A1 | 09-12-2021 | AU | 2021288756 A1 | 19-01-2023 |
| | | | CN | 115835830 A | 21-03-2023 |
| | | | EP | 4161432 A1 | 12-04-2023 |
| | | | JP | 2023530652 A | 19-07-2023 |
| | | | KR | 20230049062 A | 12-04-2023 |
| | | | US | 2021378750 A1 | 09-12-2021 |
| | | | WO | 2021250577 A1 | 16-12-2021 |
| US 2013100118 | A1 | 25-04-2013 | NONE | | |

EPO FORM P0459